# EUROPEAN PATENT SPECIFICATION

(11) **EP 3 928 922 B1**
(45) Date of publication and mention of the grant of the patent: **06.11.2024**
(21) Application number: 21180418.2
(22) Date of filing: 18.06.2021
(51) Int. Cl.: B23Q 11/00, B26D 7/18

(54) **OPERATING HEAD OF A MACHINE TOOL EQUIPPED WITH A SUCTION DEVICE**
BEARBEITUNGSSKOPF EINER WERKZEUGMASCHINE AUSGESTATTET MIT EINER ABSAUGVORRICHTUNG
TÊTE DE OPÈRATION D'UNE MACHINE-OUTIL ÉQUIPÉE D`UN DISPOSITIF D'ASPIRATION

(30) Priority: 24.06.2020 IT 202000015226
(43) Date of publication of application: 29.12.2021
(73) Proprietor: Muratori Machines S.r.l., 47899 Serravalle (SM)
(72) Inventor: Muratori, Antonio, 47893 Borgo Maggiore (SM)
(74) Representative: Fisauli, Beatrice A. M.

(56) References cited:
- EP-A1- 1 586 412
- CN-A- 108 068 161
- CN-A- 108 748 387

## Description

The present invention relates to an operating head for a machine tool, in particular in a machining centre for machining sheet-like pieces. In particular, the invention relates to an operating head provided with a precise suction device of the cutting residues, such as shavings, dust, or the like. The present invention relates in particular to the suction device which equips the aforesaid operating head.

The operating head and the relative suction device of the present invention can be used both for so-called "vertical" machining centres, i.e. provided with a substantially vertical work surface, and for machining centres with horizontal work surface.

These machine tools are particularly used to carry out cutting, shaping, drilling or milling of flat elements, such as panels, sheets or the like, made of different materials such as wood, light metals, plastic materials or composite materials such as fiberglass or the like.

Such machines generally comprise a crosspiece, movable between two opposite sides of the work surface along a first direction, and a work head slidably mounted on said crosspiece along a second direction substantially orthogonal to the first. A numerically controlled unit manages in a precise and interpolated manner the positioning and movements of the crosspiece and of the work head and, therefore, of the tool (or tools) that equips the work head.

The latter generally comprises at least one electro spindle to which at least one tool can be connected directly, generally a tool working on the same axis of rotation as the spindle, or by means of an auxiliary unit, which allows both the connection of several tools at the same time and to vary the position of the working axis of said tools with respect to that of the electro spindle.

The action of the tool on the workpiece generates, as is understandable, machining residues such as shavings, splinters, dust and the like, whose shape and size depends both on the type of tool used and on the material, or materials, of which the piece is made up.

These residues, if not removed adequately after their detachment from the piece, in addition to dirtying the area surrounding the machine tool, can cause damage to the same since they can reach delicate mechanical components or, in some cases, especially in machining centres with horizontal plane, by accumulating on the exposed surface of the piece they can cause scratches or nicks on the latter both during machining and when it is manipulated afterwards.

These machining centres are therefore provided with suction devices of the cutting residues, adapted to create a vacuum area surrounding the tool and allowing most of it to be removed just after detachment.

In the machining centres of the prior art, these suction devices generally comprise a sort of hood mounted on the operating head, often directly on the electrospindle, which surrounds the work area of the tool. The hood is in communication with suction means, vacuum generators, adapted to create a depression in said area surrounding the tool for sucking up the residues generated by the machining of the tool.

Said hood may be rigid or may comprise a flexible terminal portion, i.e. facing the surface of the piece, which may be extended or retracted to adjust the distance of the end edge from the surface of the piece.

Depending on the type of tool used, single tool or auxiliary unit, the position of the hood and/or the end edge is adjusted in such a way as to place them sufficiently close to the surface of the piece to capture as many residues as possible. For this purpose, the end edge is often provided with bristles, fringes or the like capable of coming into contact with the piece without damaging it.

EP 1586412 A1 describes a suction device of the cutting residues to be applied to an operating head of a machine tool for machining flat pieces, where the operating head comprises at least an electro spindle with a head area provided with an attachment for the connection of a tool, wherein the suction device comprises a hood which defines a main chamber which surrounds the head area of the electro spindle and which can be placed in fluid communication with suction means and wherein the hood is slidably mounted with respect to the axis of the electro spindle between a retracted position and an extended position.

However, said known suction devices have some drawbacks. The hood, in fact, generally has a shape and a size that must allow the use of any tool and auxiliary unit. In many cases, therefore, the internal volume of the hood is therefore much greater than the ideal one, i.e. sufficient to surround the tool and allow it to work the piece, especially when a direct tool such as a milling cutter or a drill is used.

This condition therefore requires the adoption of adequately sized suction means to ensure the removal and collection of the largest possible portion of the cutting residues produced. This involves both a higher cost of the machining centre and a higher operating cost due to high consumption.

For these reasons, in known machining centres said suction systems adopt compromise solutions which have a non-optimal removal efficiency.

Some known devices are equipped with deflectors, or the like, arranged in the work area inside the hood and positioned in such a way as to divert the cutting residues generated by the tool, or tools, of the auxiliary unit, in particular by circular blades, towards the inlet of the pipe connected to the suction means. This arrangement, however, only partially increases the collection and removal capacity of the cutting residues of the suction device.

In this context, the object of the present invention is to propose an operating head for a machine tool, in particular for a machining centre for the processing of flat sheet-like elements, provided with a suction device of the cutting residues which overcomes the drawbacks of the prior art.

In particular, it is an object of the invention to propose an operating head whose suction device can guarantee a better operating efficiency with any type of tool or accessory applied to the electro spindle.

Another object of the present invention is to provide an operating head with a more efficient suction device and, in particular, which allows the use of less energy-consuming suction means than those of the machines of the prior art.

Yet another object of the present invention is to provide a suction device for an operating head which allows the removal and total elimination of residues from the cutting area with different types of tools.

These objects are achieved by an operating head and a suction device of the cutting residues according to one or more of the appended claims.

In detail, according to the invention, the operating head comprises at least:
- an electro spindle with a cylindrical-shaped head area provided with an attachment for the connection of a tool or of an auxiliary unit; and
- a precise suction device for the cutting residues generated during machining, mounted on said operating head.

According to the invention, said suction device comprises a tubular hood defining a main chamber, which surrounds the head area of the electrospindle, which is placed in communication with suction means.

According to a preferred aspect of the present invention, said hood comprises a first portion slidably mounted on the body of the electro spindle, at the head area, and a second movable portion, slidably mounted on the first portion, for example in a telescopic manner, both movable along the axis of the electro spindle between a retracted position and an extended position.

In the aforesaid retracted position, the hood is approached to the head area of the electro spindle while in the extended position it moves away from the latter towards the surface of the workpiece.

Each portion therefore completes a stretch of the total stroke between the retracted and extended positions.

According to a preferred variant, the first and second portions of the hood have a substantially circular section. The second portion preferably has a larger section than the first; therefore in the retracted position, in which the two portions are partially superimposed, the second portion at least partially surrounds the first.

According to another aspect of the present invention, said second portion of the hood has a peripheral edge defining a circular opening which, in the retracted position, is substantially aligned with the end of the head area of the electro spindle. Said circular opening, or rather the relative peripheral edge, has a larger diameter than the diameter of the head area at the end; in this way, in the retracted position, between said peripheral edge of the second portion and said end of the head area there is an annular passage in communication with the main chamber.

According to a variant of the invention, one of the portions of the hood may be fixedly mounted on the electro spindle and act as a guide for the second portion.

According to another variant, the hood may comprise only a portion slidably mounted on the electrospindle. In this case, the peripheral edge and the relative opening are obtained on this single portion.

According to the present invention, the suction device further comprises a containment element to be applied to at least one tool of an auxiliary unit when the latter is connected to the electro spindle.

According to the invention, said containment element may be removably applicable to said auxiliary unit.

In detail, said containment element comprises a flat annular element which, in operating condition and with the hood in retracted position, said annular element is mounted substantially close to or aligned with the end of the head area of the electro spindle in such a way as to obstruct the annular passage between the latter and the peripheral edge of the hood.

According to an aspect of the invention, said flat annular element has an external diameter equal to or slightly less than the diameter of the hood opening.

The containment element further comprises at least one casing which surrounds at least in part said tool of the auxiliary unit forming at least one secondary chamber.

The secondary chamber communicates, through at least one passage, with an opening made in the annular element, said opening leads into the main chamber. In this way, said secondary chamber communicates, through the main chamber, with the suction means.

The casing typically has a shape and size dedicated to the tool type of the auxiliary unit. In this way, the volume of the secondary chamber is as small as possible.

The suction device thus configured has considerable advantages explained below.

By virtue of its configuration, said suction device in fact has two possible operating modes.

The first operating mode is feasible when a direct tool is mounted on the operating head, such as for example a cutter or a tip, which generally has a reduced transverse or lateral bulk. During the machining with said direct tool, the suction device is devoid of the containment element and can work with the hood in the extended or partially extended position. More in detail, the position of the hood, or more precisely of the second portion, can be adjusted so that the working part of the tool protrudes beyond the end of the hood (which can substantially coincide with the peripheral edge and the relative circular opening) only by a portion useful to carry out the machining foreseen on the piece.

In the first operating mode, when the tool is in contact with the workpiece, the tip of the hood is brought close to, or almost in contact with, the surface of the workpiece (for example spaced by a few millimetres) so that the main chamber completely, or almost completely, surrounds the tool and the work area. In this condition, the suction means, in fluid communication with the main chamber, create a depression in the aforementioned chamber, removing the residues produced by the tool during machining, conveying them towards a collection area.

The second operating mode of the suction device is feasible when an auxiliary unit (or aggregate or blade) is applied to the electrospindle which, in turn, may carry one or more tools. For example, the auxiliary unit may allow the mounting of a cutting disk which rotates on an axis perpendicular to that of the spindle, of two or more drilling/milling tools and acting on the same axis or on independent axes, etc.

In this second operating mode, the hood, or its second portion where provided, is brought into the retracted position and the containment element is applied to the auxiliary unit so that the at least one casing is positioned around the tool or tools.

As explained above, in this configuration the annular element of the containment element obstructs the annular passage between the peripheral edge of the hood and the head area of the electro spindle. In this way, the depression created by the suction means propagates from the main chamber, through the opening in the annular element, to the secondary chamber, in which the tool or tools of the auxiliary unit are at least in part housed.

The annular element therefore has the function of isolating the main chamber from the outside, so that the flow suctioned in by the suction means comes mainly (therefore net of minimum leakage due to sealing) from the secondary chamber.

The cutting residues generated by the machining of the tool of the auxiliary unit are then conveyed towards the main chamber and from it towards the collection area.

By virtue of the operating head according to the present invention, and in particular of the residue suction system described above, it is possible to significantly reduce the power of the suction means and, at the same time, improve the efficiency in the collection of cutting residues.

In fact, by virtue of the two operating modes of the system, it is possible in both cases to reduce pressure drops to a minimum. In fact, in the first operating mode it is contemplated that the hood works only with direct tools with limited dimensions; therefore it is possible to considerably limit the size of the hood section and therefore its volume. For example, the hood may therefore have a diameter slightly greater than that of the head area of the electro spindle. This allows a sufficient depression to be created inside the main chamber even with a modest suction power. The reduced volume of the main chamber also allows the dispersion of residues from the contact area between the tool and the piece to be limited, improving the removal efficiency.

In the second operating mode, on the other hand, the hood is retracted to allow the mounting of the auxiliary unit whose work area has a significantly greater transverse dimension with respect to that of a direct tool, such as a cutter or a tip, or in any case often greater than the size of the head area of the electro spindle. In this case, the containment element allows both isolating the main chamber from the outside and concentrating the suction power in the secondary chamber, that is a rather limited volume.

In both configurations, the suction device allows a "precise" suction of the residues, i.e. in an area close to that of their detachment, in order to avoid the dispersion thereof and, therefore, easier removal and collection.

The conformation of the annular element, which rotates integrally with the auxiliary unit, also allows the latter to work on a 360° working arc while maintaining the same suction efficiency in any positioning angle.

The containment element, which allows a precise suction of the residues, is in fact always in communication with the main chamber, through the opening in the annular element, irrespective of its angular position, and therefore that of the auxiliary unit.

According to the invention, the operating head may be provided in a kit comprising a plurality of containment elements provided with casings of different shapes and sizes to be applied to different types of auxiliary units.

According to another aspect of the invention, the first portion of the hood has a tubular development and has a section with a shape substantially identical to that of the head area of the electro spindle. The second portion, on the other hand, comprises a first annular section with an internal diameter substantially identical to the external diameter of the first portion and extending radially therefrom, and a second tubular section, which extends from the first section.

According to another aspect of the invention, the displacement of the first and second portions of the hood is controlled by at least one actuator, for example pneumatic or, more preferably, electric, possibly provided with a position control.

According to another aspect of the invention, the containment element is therefore provided with fixing means for connection to the auxiliary unit, such as for example brackets or the like.

According to another aspect of the invention, the casing is made in one piece with the annular element.

According to another variant, said parts may also be made separately and rigidly joined together. In this way it is possible to connect each time to the annular element casings of different shapes according to the type of auxiliary unit.

According to another aspect of the invention, the peripheral edge has a diameter smaller than the external (or larger) diameter of the hood and is obtained on an end face of said hood.

According to a variant of the invention, said face has an annular or substantially annular development. In a preferred variant, tangential notches are formed on the surface of the end face which allow a swirling flow to be created in the main chamber when the operating head is used in the first operating mode.

According to another aspect of the invention, at the outer perimeter of the end face, the hood is provided with a containment edge which extends substantially perpendicular to said face. Said containment edge preferably consists of bristles or other equivalent flexible elements.

According to this variant, the end face may comprise a curved portion, substantially annular, and a further marginal portion which extends at the outlet conduit. Said marginal portion may have a curved, polygonal or mixed perimeter.

Further features and advantages of the present invention will become more apparent from the description of a preferred but non-exclusive exemplary embodiment of a device for handling pieces as shown in the accompanying figures, in which:
- Figure 1a is a top perspective view of the operating head according to the present invention, according to a first operating mode;
- Figure 1b is a bottom perspective view of the operating head of Figure 1a;
- Figure 1c is a side view of the operating head of Figure 1a;
- Figure 1d is a sectional view of the operating head of Figure 1a;
- Figure 1e is a bottom plan view of the operating head of Figure 1a;
- Figure 2a is a top perspective view of the operating head according to the present invention, according to a second operating mode;
- Figure 2b is a side view of the operating head of Figure 2a;
- Figure 2c is a sectional view of the operating head of Figure 2a;
- Figure 2d is a bottom plan view of the operating head of Figure 2a;
- Figure 3 is a sectional view of the suction device in the second operating mode;
- Figure 4a is a perspective view of the containment element of the suction system of Figure 3;
- Figure 4b is a top plan view of the containment element of Figure 4a;
- Figure 4c is a bottom plan view of the containment element of Figure 4a;
- Figure 5a is a top perspective view of the operating head according to another variant of the invention, in the first operating mode;
- Figure 5b is a bottom perspective view of the operating head of Figure 5a;
- Figure 6a is a top perspective view of the operating head according to another variant of the invention, in the second operating mode;
- Figure 6b is a side view of the operating head of Figure 6a.

With reference to the accompanying figures, the reference numeral 1 generally indicates an operating head for a machine tool, in particular of the type for machining panels, sheets or the like.

In the examples shown in the figures, the operating head 1 is represented in a simplified manner, i.e. only with the parts necessary to describe the present invention; the figures do not show, for example, the support structure which allows the connection thereof to the machine tool and its movement and further components, such as secondary electro spindles, tools, or other mechanical and/or electrical or electronic components.

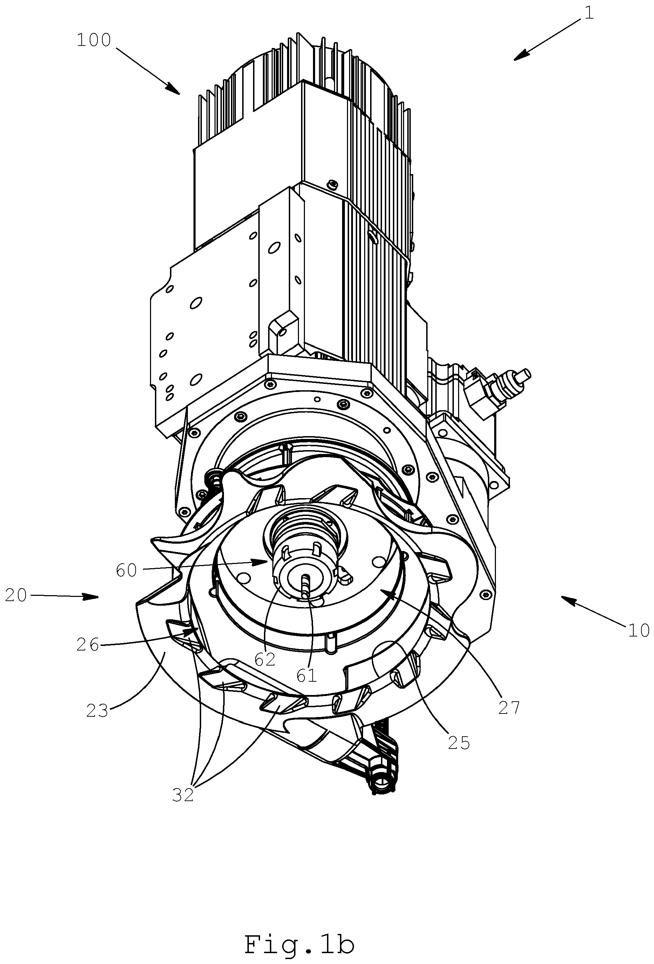

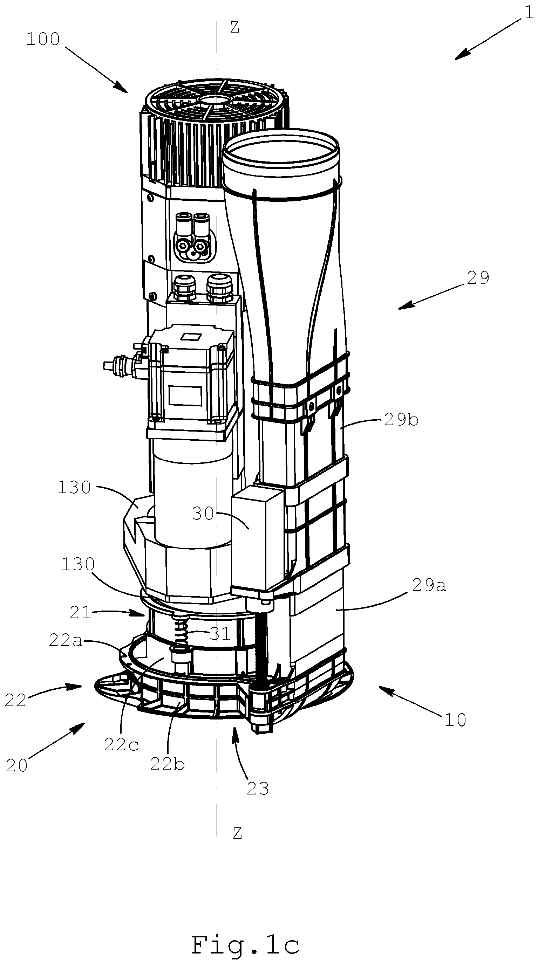

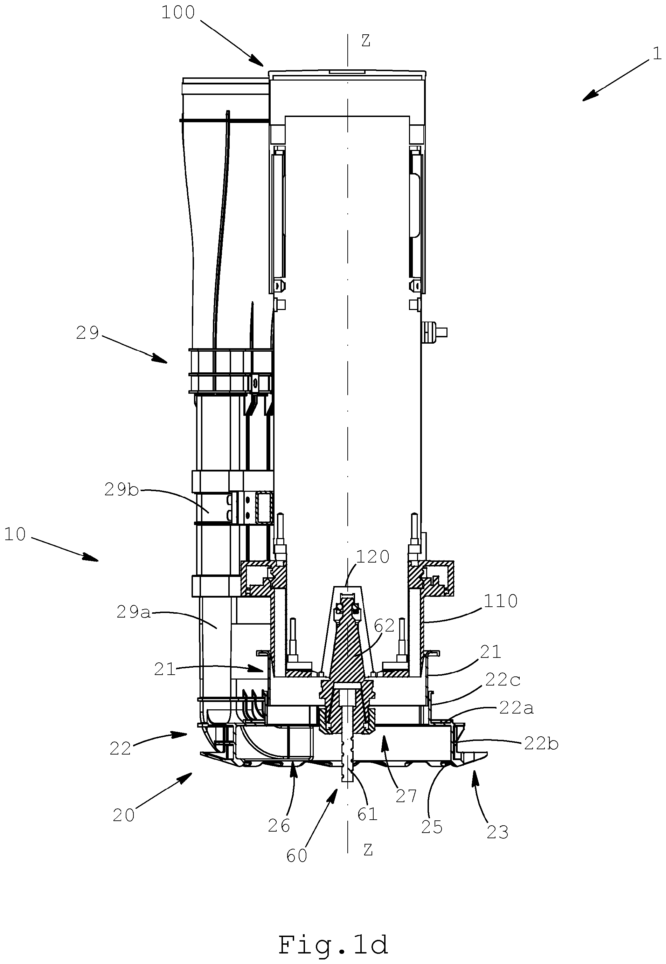

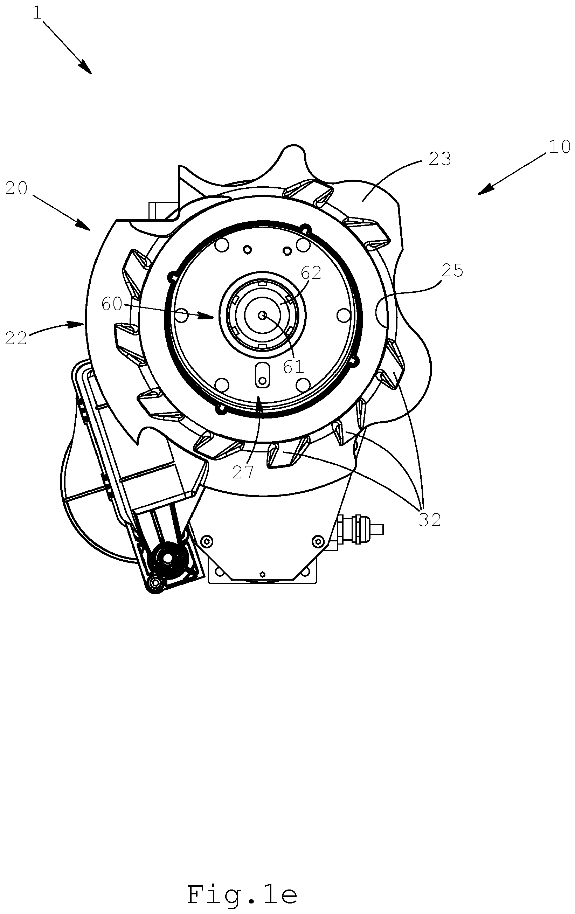

The operating head 1 comprises an electro spindle 100 with a work axis indicated with Z. The electro spindle 100 has a head area 110, which in the working condition faces the piece, provided with an attachment 120 for connecting a tool 60 or an auxiliary unit 70. The sectional view of Figure 1d shows a tool 60 connected to the attachment 120 in the head area 110. It should be noted that in this figure, the internal components of the electro spindle 100 have been omitted for greater clarity of the figure. Such head area 110 generally has a circular section, more precisely it has a substantially cylindrical shape.

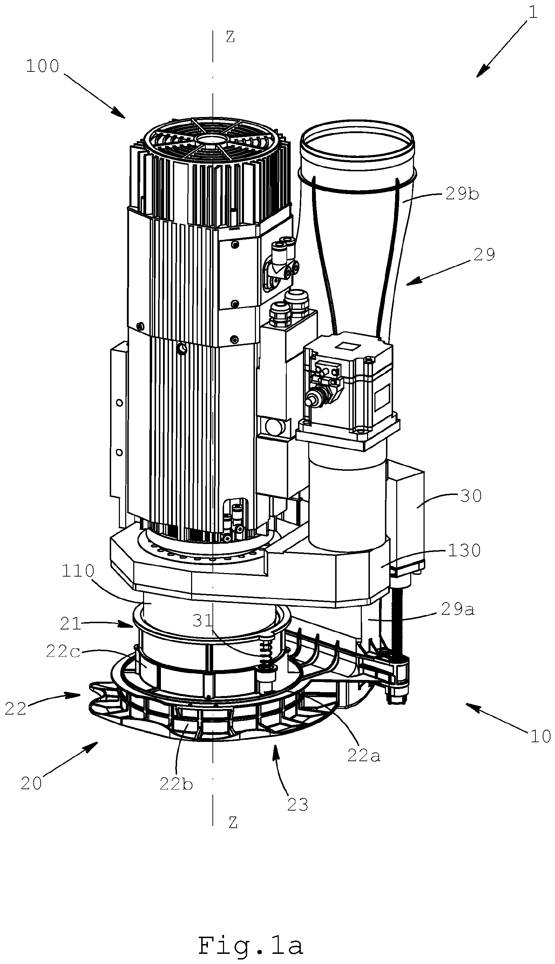

Figures 1a to 1e show the operating head 1 in a first operating mode in which a tool 60 is connected to the attachment 120 of the head area. In the illustrated example, said tool 60 comprises a slot mill 61 clamped in an insert 62, or pliers, connected to the attachment 120.

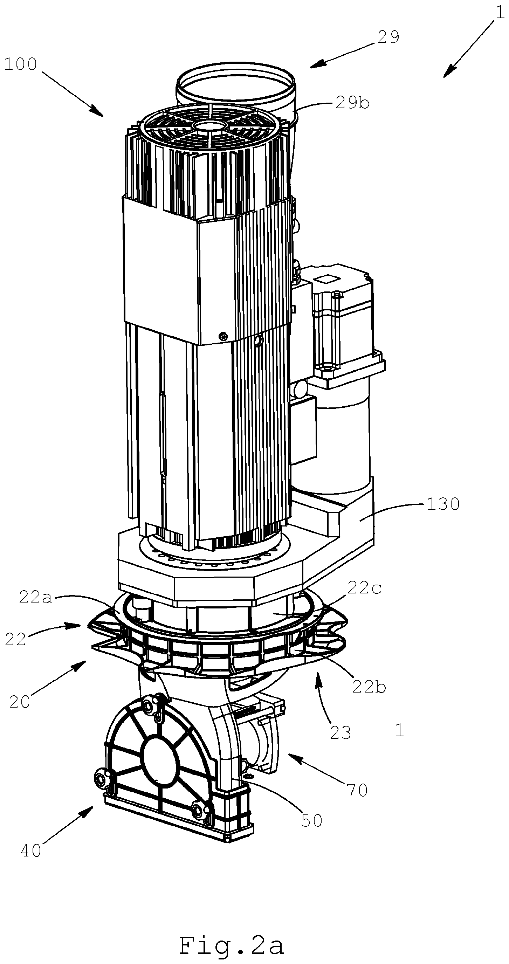

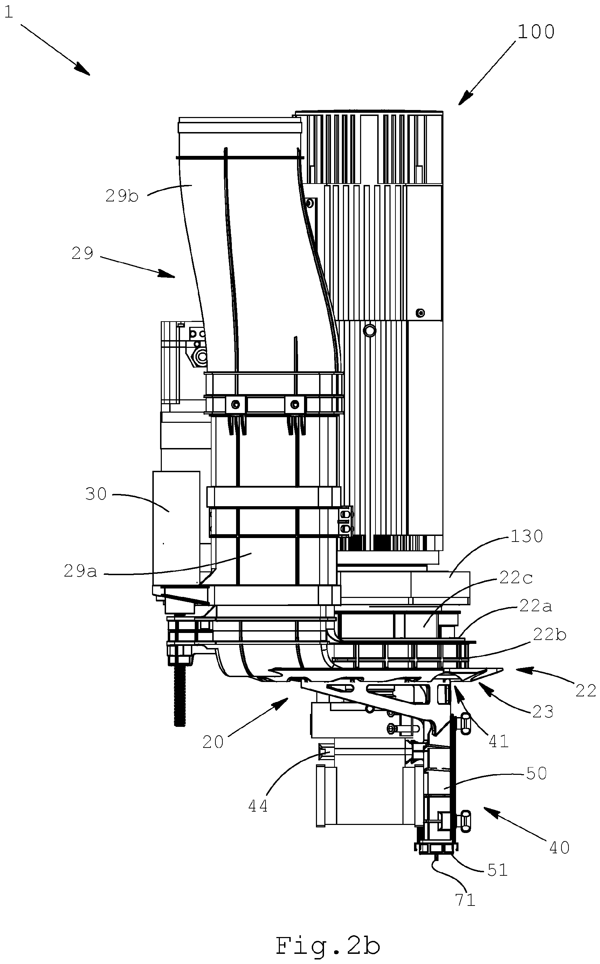

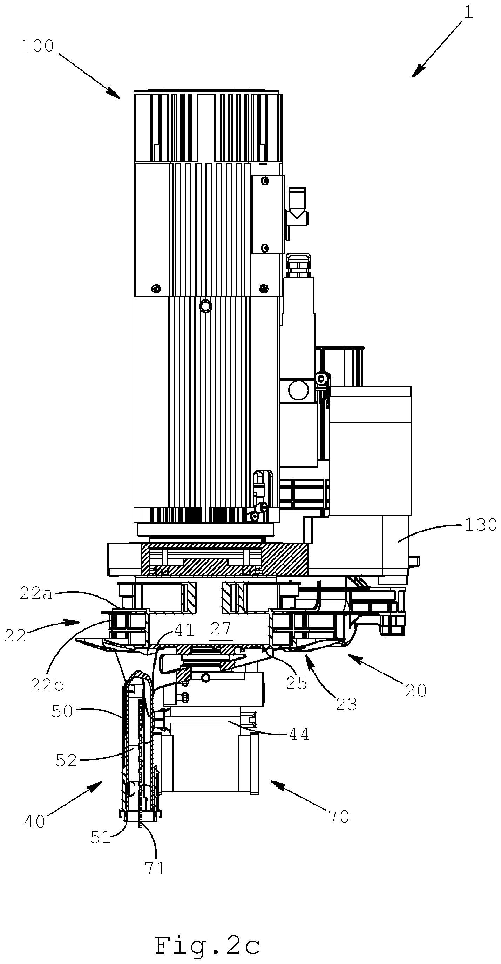

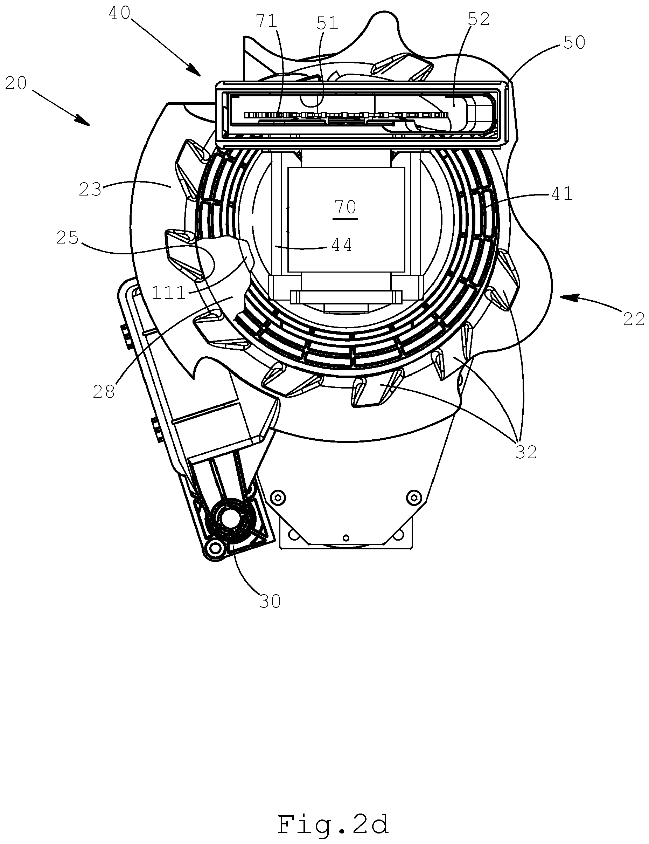

Figures 2a to 2d illustrate the operating head 1 in a second operating mode in which an auxiliary unit 70 is connected to the attachment 120. In the illustrated example, said auxiliary unit 70 supports a circular blade 71 which rotates on an axis perpendicular to the axis Z of the electro spindle 100.

It should be noted that the operating modes of the operating head 1 illustrated are only two examples and that said operating head may be provided with any tool 60 which can be directly connected to the attachment 120 of the head area (the term directly means however that the machined part can be fixed by means of a rigid insert) or with various types of auxiliary units 70 which can carry one or more working tools of various types such as circular blades, drills, cup cutters, etc.

In the accompanying figures, a rotation device 130 is also shown, applied to the electro spindle 100, adapted to control the 360° rotation of the auxiliary unit 70 around the axis Z of the electro spindle 100. Such device, being well known to those skilled in the art, will not be described in detail.

According to the present invention, the operating head 1 is provided with a suction device, indicated as a whole with the reference numeral 10, adapted to collect the cutting residues generated as a result of the action of the tool or tools on the piece, preventing them from being scattered on the piece, on the machine and/or on the ground, to convey them to a collection area.

Such suction device 10 comprises a hood 20 and a containment element 40.

The hood 20 comprises a first movable portion 21 slidably mounted on the electro spindle 100 at the head area 110. The hood 20 further comprises a second portion 22 slidably connected to the first portion 21, more specifically in a telescopic manner. In practice, the first portion 21 acts both as a collar to guide the translation of the second portion 22 and as a seal to limit the passage of air between said parts and between them and the head area 110 of the electro spindle 100. For this purpose, said first portion 21 has a tubular development and has a section of substantially identical shape to that of the head area 110 of the electrospindle, generally cylindrical.

Preferably, the second portion 22 comprises a first annular portion 22a with an internal diameter substantially identical to the external diameter of the first portion 21 and extending radially therefrom. A second tubular-shaped section 22b extends from said first section 22a. Said second portion 22b may have an increasing diameter towards the free end, that is the one facing the piece in the operating condition, or, preferably, it is also substantially cylindrical.

According to another variant, said second portion may comprise a further third section 22c of tubular shape, and preferably cylindrical, which slides in contact with the external surface of the first portion 21. This third section 22c helps to keep the two portions 21, 22 aligned and coaxial.

Preferably, elastic means 31, such as springs or equivalent, are provided between the first portion 21 and the second portion 22 of the hood, capable of exerting a thrust to keep the second portion 22 extended with respect to the first portion 21.

In this way, during extension, first the second portion 22 slides with respect to the first, completing its stroke stretch, and subsequently the first portion 21 slides with respect to the head area 110 of the electro spindle 100.

Said second portion 22 has, at said free end, a peripheral edge 25 of circular shape which defines a respective opening 26.

Said peripheral edge 25, preferably, has a smaller diameter than that of the second portion 22b and is formed on an end face 23 of the hood.

In the example of Figures 1a-1e, 2a-2d and 3, said end face 23 has a substantially annular development with an internal diameter which coincides with said peripheral edge 25.

The second portion 22 of the hood 20, and possibly also the first portion 21, define a main chamber 27.

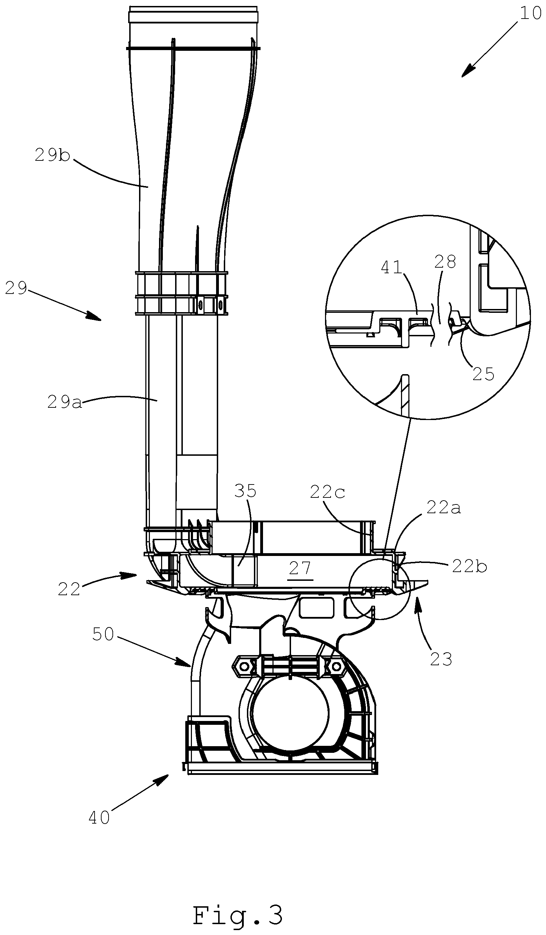

Said main chamber 27 is in fluid communication with suction means, not illustrated, adapted to generate a vacuum in the chamber to remove the cutting residues produced by machining the piece. According to a preferred variant, in the wall of the second stretch 22b of the second portion, an opening 35 is formed which communicates with an outlet conduit 29, as shown in Figure 3.

Said conduit 29 comprises a first stretch 29a, preferably made in one piece with the second portion 22 of the hood and, therefore, substantially rigid. The conduit also comprises a second section 29b, again preferably rigid, fixedly mounted on the operating head 1. To allow movement of the second portion of the hood between the extended and retracted positions, the first and second portions of the conduit are preferably connected in a telescopic manner to each other. Alternatively, the second stretch 29 may be flexible or, again, a further flexible stretch may be interposed between said first and second rigid stretches.

According to the invention, the hood 20 is movable between an extended position and a retracted position. Such movement is preferably controlled by actuators 30.

In the extended or partially extended position, the second portion 22 may be approached to the piece; more precisely, its end face 23 may be brought close to the surface of the piece, spaced from it by a few millimetres.

According to a preferred variant, notches 32 are formed on said end face 23, arranged tangentially with respect to the axis Z of the spindle. Said notches allow the sucked air to be channelled into the space between the hood and the surface of the piece to create a vortex which conveys the residues towards the opening 35 and the outlet conduit 29.

In the retracted position, said second portion 22 is substantially superimposed on the first portion 21. In said position, the peripheral edge 25 is substantially aligned with the end 111 of the head area 110.

Said peripheral edge 25 has a larger diameter than that of the head area so that between said parts there is an annular passage 28 which faces the main chamber 27.

In the first operating mode illustrated in Figures 1a to 1e, the operating head 1 is configured to work with the hood 20 in an extended or partially extended position. As can be seen from Figure 1d, the main chamber 27 almost completely surrounds the tool 60 (only a short stretch protrudes beyond the hood) and therefore the working area where it acts.

In this way, the cutting residues generated by the tool remain confined in the hood 20 and removed by the suction means through the opening 35 of the second portion 22 and the outlet conduit 29.

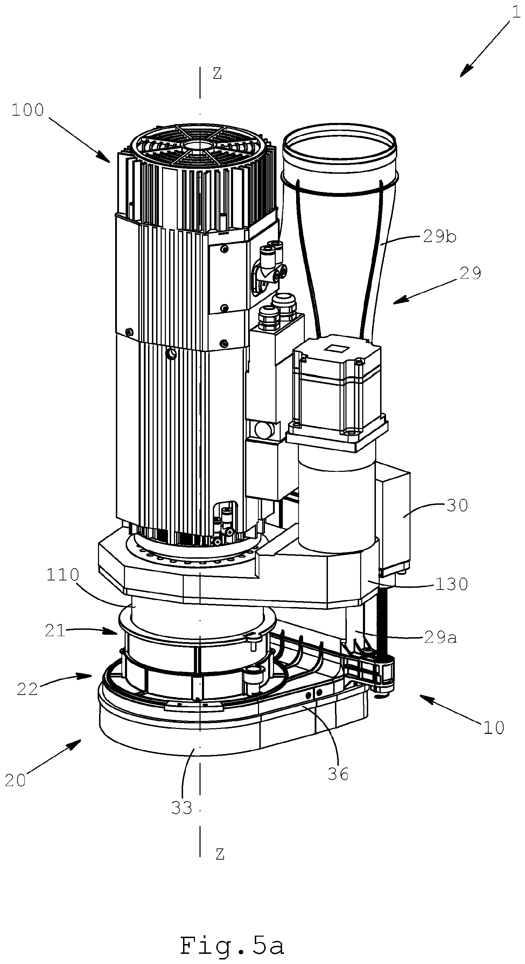

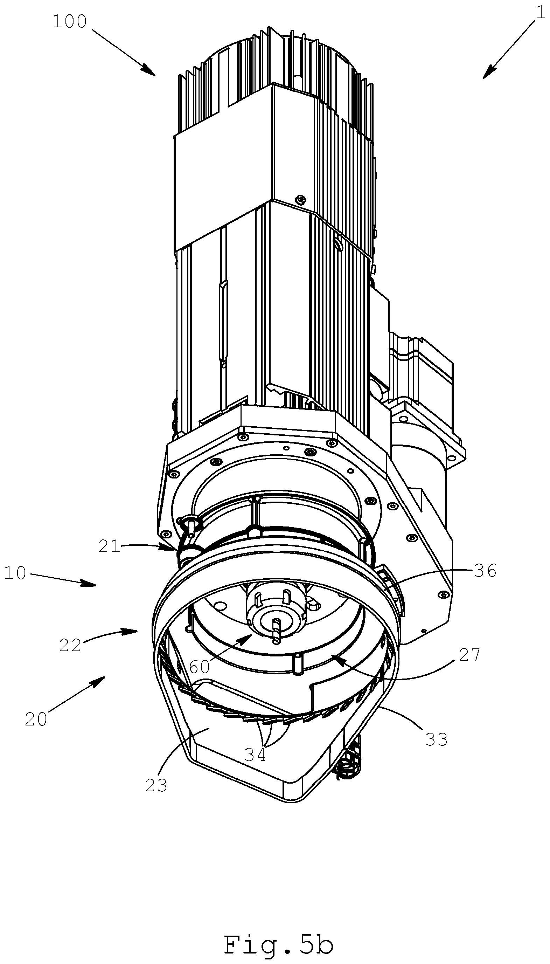

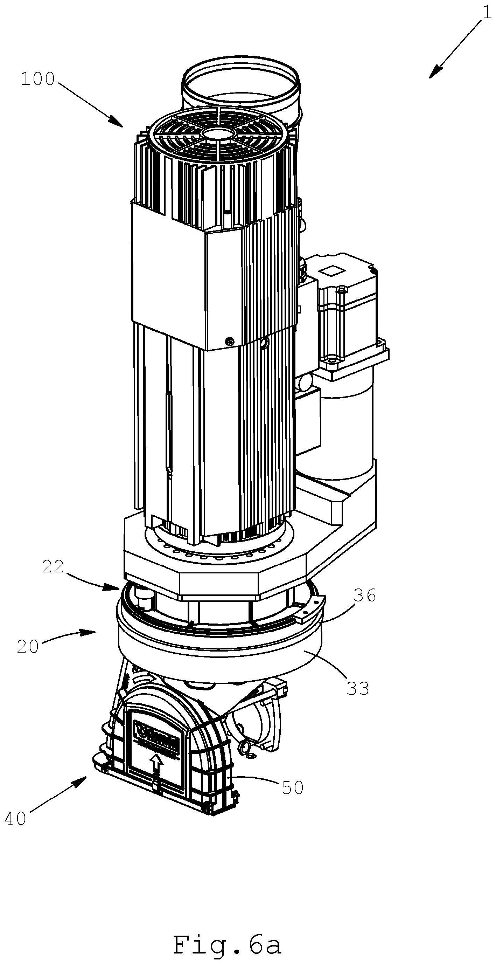

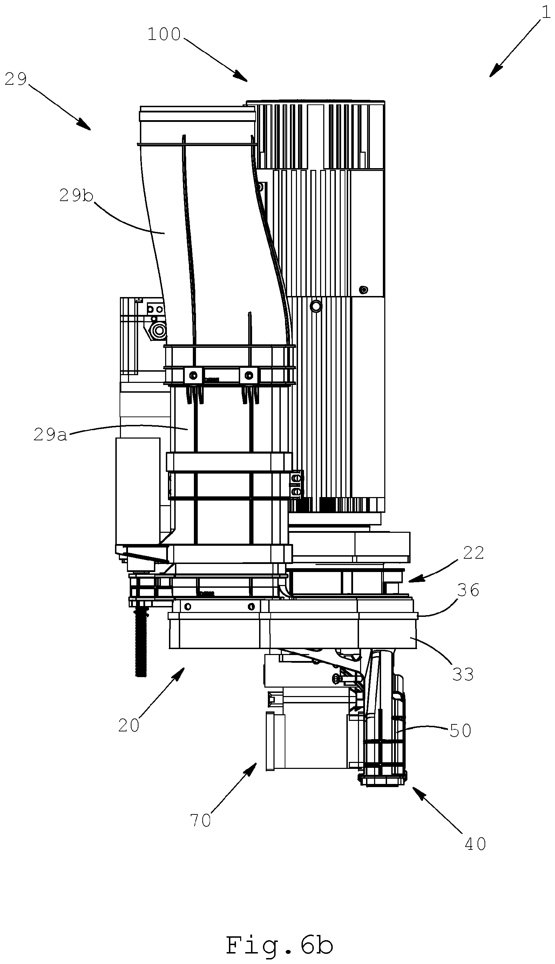

Figures 5a-5b and 6a-6b show the hood 20 according to another variant of the invention.

In this variant, at the external perimeter 36 of the end face 23 there is provided a containment edge 33 for the cutting residues, which extends substantially perpendicular to said face, i.e. towards the surface of the piece to be machined. Said containment edge 33 is preferably made with flexible bristles or equivalent. Such edge allows further limiting the dispersion of residues in a confined area near the tool, facilitating suction and removal by the suction device 10.

In this variant, on the surface of the end face 23 there are provided deflectors 34 arranged in proximity to the peripheral edge 25 to generate a swirling air flow which helps to transport the cutting residues from the main chamber 27 to the outlet conduit 29.

In the example of Figures 5a-5b and 6a-6b, the end face 23 comprises a partially annular stretch and a marginal stretch which extends from the peripheral edge 25 up to the outlet conduit 29, i.e. below it.

According to the invention, the operating head 1 further comprises a containment element 40 which may be used in the second operating mode illustrated in Figures 2a to 2d. As already repeated, according to the invention, in the second operating mode the hood 20 is kept in the retracted position described above.

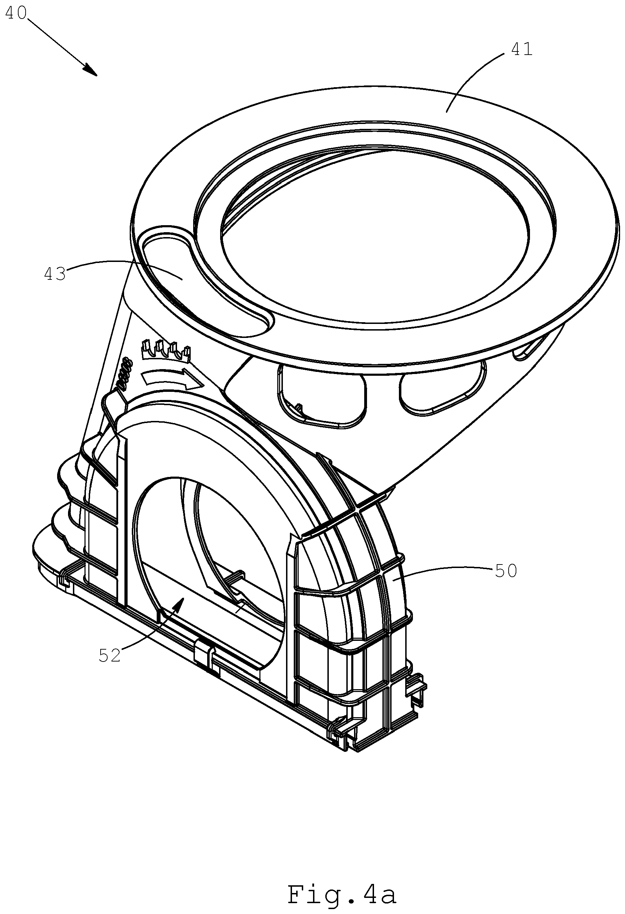

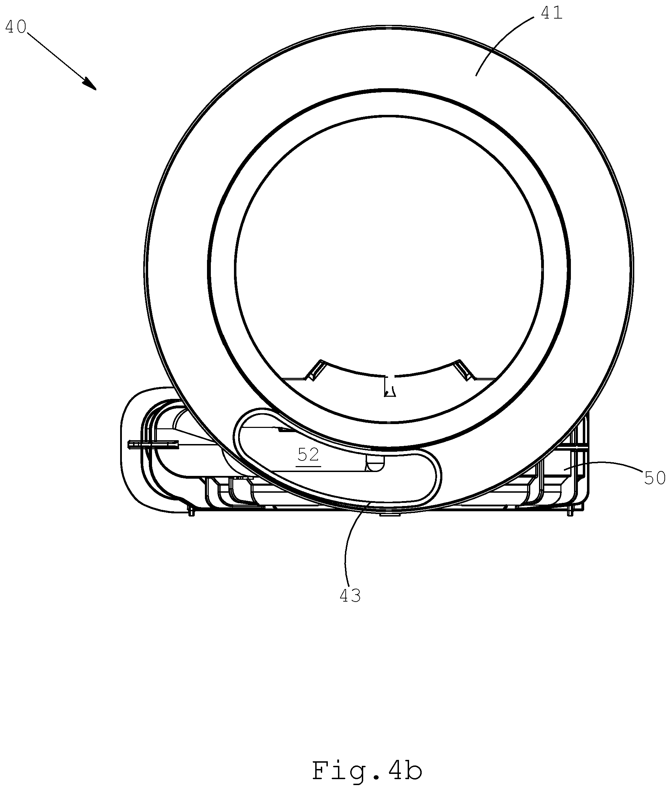

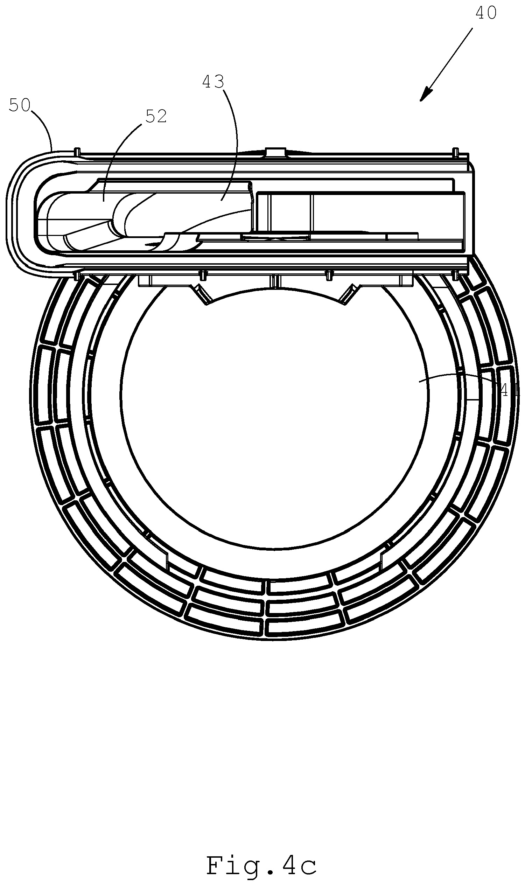

The containment element 40 is illustrated in detail in Figures 4a to 4c.

According to the invention, said containment element 40 is preferably connected to the auxiliary unit 70 which is connected to the electro spindle 100 in the aforementioned second operating mode. Said containment element can therefore rotate integrally with the auxiliary unit 70 around the axis Z of the electro spindle 110 under the action of the rotation device 130.

The containment element is therefore provided with fixing means such as for example brackets 44 or the like for connection to the auxiliary unit 70.

The containment element 40 comprises an annular element 41, preferably flat or with a flattened shape. Said annular element 41 has an external diameter equal to or slightly lower than that of the peripheral edge 25 of the hood.

In the example of the figures, said annular element 41 also has a smaller internal diameter than that of the head area 110 at the end 111. Said annular element 41 may however have a dimension substantially corresponding to that of the annular passage 28, therefore with an internal diameter equal to or slightly greater than that of the end 111 of the head area 110.

In the illustrated example, the containment element 40 comprises a casing 50 adapted to surround the circular blade 71 of the auxiliary unit 70 so that only a minimal portion protrudes beyond an end edge 51 to come into contact with the workpiece.

The casing 51 therefore defines a secondary chamber 52 which encloses the working area of the tool 71 of the auxiliary unit 70.

The casing 50 is preferably made in one piece with the annular element 41, although said parts may also be made separately and rigidly joined together.

In the connection area between the casing 50 and the annular element 41, the latter has at least one through opening 43 which opens into the secondary chamber 52. Said opening 43 preferably has an elongated shape, for example with a slot.

When the containment element 40 is applied to the auxiliary unit 70 and the latter is connected to the electro spindle 100, the annular element 41 obstructs the annular passage 28. By virtue of the opening 43, the main chamber 27 and the secondary chamber 52 are nevertheless communicating. The depression generated by the suction means then propagates from the main chamber 27 to the secondary chamber, so as to be able to remove the residues produced by the action of the tool 71 of the auxiliary unit.

The shape of the casing 50 shown in the accompanying figures is purely illustrative since this element may be made ad hoc substantially for any type of auxiliary unit and its related tools.

The invention has been described for illustrative and non-limiting purposes, according to some preferred embodiments. The man skilled in the art will be able to find several other embodiments and variants thereof, all falling within the scope of protection of the following claims.

## Claims

1. An operating head (1) for a machine tool for machining flat and sheet-like pieces, such as panels or the like, said operating head (1) comprising at least:
- an electro spindle (100) with a cylindrical head area (110) provided with an attachment (120) for the connection of a tool (60) or of an auxiliary unit (70); and
- a suction device (10) of the cutting residues generated during machining;
wherein said suction device (10) comprises a hood (20) which defines a main chamber (27) which surrounds the head area (110) of the electro spindle (100) and which can be placed in fluid communication with suction means,
wherein said hood (20) is slidably mounted with respect to the axis (Z) of the electro spindle (100) between a retracted position and an extended position,
**characterized in that** said hood (20) comprises a peripheral edge (25) which defines a circular opening (26) which, in the retracted position, is substantially aligned with the end (111) of the head area (110) of the electro spindle (100), said circular opening (26) having a diameter greater than the diameter of the head area (110) so that, in the retracted position of the hood, between said peripheral edge (25) and said end (111) of the head area (110) there is an annular passage (28) in communication with the main chamber (27),
wherein the suction device (10) further comprises a containment element (40) applicable to at least one tool of an auxiliary unit (70), wherein said containment element (40) comprises:
- a flat annular element (41) mounted substantially close to or aligned with the end (111) of the head area (110) of the electro spindle (100) so as to obstruct the annular passage (28) between it and the peripheral edge (25) of the hood; and
- at least one casing (50) which surrounds at least in part said tool of the auxiliary unit (70) forming at least one secondary chamber (52);
wherein said secondary chamber (52) communicates with an opening (43) formed in the annular element (41) which, in the aforementioned operating condition, flows into the main chamber (27) so as to place said secondary chamber (52) in communication with the suction means.

2. The operating head (1) according to claim 1, wherein said hood (20) comprises a first movable portion (21), slidably mounted on the electro spindle body at the head area (110), and a second movable portion (22), slidably mounted with respect to said first portion (21), said opening (26) being formed at the end (23) of said second portion (22).

3. The operating head (1) according to claim 2, wherein the first portion (21) of the hood has a tubular development and has a section of a shape substantially identical to that of the head area (110) of the electro spindle (100) and wherein the second portion (22) comprises a first annular stretch (22a) extending radially from the first portion (21) and a second tubular stretch (22b).

4. The operating head (1) according to any one of the preceding claims, wherein an opening (35) is formed in the second portion (22) which flows into a conduit (29) in communication with the suction means.

5. The operating head (1) according to any one of the preceding claims, wherein said peripheral edge (25) has a diameter smaller than that of the hood (20) and is formed on an end face (23) of said hood.

6. The operating head (1) according to claim 5, wherein tangential notches (32) are formed on said end face (23) which create a swirling flow in the main chamber (27).

7. The operating head (1) according to any one of the preceding claims, wherein said containment element (40) is removably applicable to the auxiliary unit (70) when it is connected to the electro spindle (100).

## Patentansprüche

1. Ein Arbeitskopf (1) für eine Werkzeugmaschine zur Bearbeitung von flachen und plattenförmigen Teilen, wie Paneele oder dergleichen, wobei der besagte Arbeitskopf (1) mindestens Folgendes umfasst:
- eine Elektrospindel (100) mit einem zylindrischen Kopfbereich (110), versehen mit einem Aufsatz (120) für den Anschluss eines Werkzeugs (60) oder einer Hilfseinheit (70); und
- eine Absaugvorrichtung (10) für die Schneiderückstände, die bei der Bearbeitung erzeugt wurden;
wobei die besagte Absaugvorrichtung (10) eine Haube (20) umfasst, die eine Hauptkammer (27) definiert, die den Kopfbereich (110) der Elektrospindel (100) umgibt und die in Fluidverbindung mit Absaugmitteln gebracht werden kann,
wobei die besagte Haube (20) in Bezug auf die Achse (Z) der Elektrospindel (100) zwischen einer eingezogenen Position und einer ausgefahrenen Position gleitend montiert ist,
**dadurch gekennzeichnet, dass** die besagte Haube (20) einen Umfangsrand (25) umfasst, der eine kreisförmige Öffnung (26) definiert, die in der eingezogenen Position im Wesentlichen mit dem Ende (111) des Kopfbereichs (110) der Elektrospindel (100) ausgerichtet ist, wobei die besagte kreisförmige Öffnung (26) einen Durchmesser besitzt, der größer ist als der Durchmesser des Kopfbereichs (110), so dass in der eingezogenen Position der Haube zwischen dem besagten Umfangsrand (25) und dem besagten Ende (111) des Kopfbereichs (110) ein ringförmiger Durchgang (28) in Verbindung mit der Hauptkammer (27) besteht,
wobei die Absaugvorrichtung (10) ferner ein Eingrenzungselement (40) umfasst, das auf mindestens ein Werkzeug einer Hilfseinheit (70) anwendbar ist, wobei das besagte Eingrenzungselement (40) Folgendes umfasst:
- ein flaches, ringförmiges Element (41), das im Wesentlichen in der Nähe des Endes (111) des Kopfbereichs (110) der Elektrospindel (100) angebracht oder mit diesem ausgerichtet ist, so dass es den ringförmigen Durchgang (28) zwischen diesem und dem Umfangsrand (25) der Haube versperrt; und
- mindestens ein Gehäuse (50), das das besagte Werkzeug der Hilfseinheit (70) zumindest teilweise umgibt und mindestens eine Sekundärkammer (52) bildet;
wobei die besagte Sekundärkammer (52) mit einer Öffnung (43) in Verbindung steht, die in dem ringförmigen Element (41) ausgebildet ist, das in dem zuvor genannten Betriebszustand in die Hauptkammer (27) fließt, so dass die besagte Sekundärkammer (52) mit dem Absaugmitteln in Verbindung zu bringen.

2. Der Arbeitskopf (1) gemäß Anspruch 1, wobei die besagte Haube (20) einen ersten beweglichen Abschnitt (21), der gleitend auf dem Elektrospindelkörper am Kopfbereich (110) montiert ist, und einen zweiten beweglichen Abschnitt (22) umfasst, der gleitend in Bezug auf den besagten ersten Abschnitt (21) montiert ist, wobei die besagte Öffnung (26) am Ende (23) des besagten zweiten Abschnitts (22) ausgebildet ist.

3. Der Arbeitskopf (1) gemäß Anspruch 2, wobei der erste Abschnitt (21) der Haube einen rohrförmigen Verlauf und einen Querschnitt mit einer Form aufweist, die im Wesentlichen mit der des Kopfbereichs (110) der Elektrospindel (100) identisch ist, und wobei der besagte zweite Abschnitt (22) eine erste ringförmige Strecke (22a), die sich radial von dem ersten Abschnitt (21) erstreckt, und eine zweite rohrförmige Strecke (22b) umfasst.

4. Der Arbeitskopf (1) gemäß einem jeden der vorhergehenden Ansprüche, wobei eine Öffnung (35) in dem zweiten Abschnitt (22) ausgebildet ist, die in eine Leitung (29) fließt, die mit den Absaugmitteln in Verbindung steht.

5. Der Arbeitskopf (1) gemäß einem jeden der vorhergehenden Ansprüche, wobei der besagte Umfangsrand (25) einen Durchmesser besitzt, der kleiner ist als der der Haube (20), und an einer Endfläche (23) der besagten Haube ausgebildet ist.

6. Der Arbeitskopf (1) gemäß Anspruch 5, wobei Tangentialkerben (32) an der besagten Endfläche (23) ausgebildet sind, die eine Wirbelströmung in der Hauptkammer (27) erzeugen.

7. Der Arbeitskopf (1) gemäß einem jeden der vorhergehenden Ansprüche, wobei das besagte Eingrenzungselement (40) abnehmbar an der Hilfseinheit (70) anbringbar ist, wenn diese mit der Elektrospindel (100) verbunden ist.

## Revendications

1. Tête d'usinage (1) pour une machine-outil destinée à l'usinage de pièces plates et en feuilles, telles que des panneaux ou autres, ladite tête d'usinage (1) comprenant au moins :
- une électrobroche (100) avec une zone de tête cylindrique (110) pourvue d'une fixation (120) pour la connexion d'un outil (60) ou d'une unité auxiliaire (70) ; et
- un dispositif d'aspiration (10) des résidus de coupe générés pendant l'usinage ;
où ledit dispositif d'aspiration (10) comprend une hotte (20) qui définit une chambre principale (27) qui entoure la zone de tête (110) de l'électrobroche (100) et qui peut être placée en communication fluidique avec des moyens d'aspiration,
où ladite hotte (20) est montée de manière coulissante par rapport à l'axe (Z) de l'électrobroche (100) entre une position rétractée et une position déployée,
**caractérisée par le fait que** ladite hotte (20) comprend un bord périphérique (25) qui définit une ouverture circulaire (26) qui, en position rétractée, est substantiellement alignée avec l'extrémité (111) de la zone de tête (110) de l'électrobroche (100), ladite ouverture circulaire (26) ayant un diamètre supérieur au diamètre de la zone de tête (110) de sorte que, dans la position rétractée de la hotte, entre ledit bord périphérique (25) et ladite extrémité (111) de la zone de tête (110), il y a un passage annulaire (28) en communication avec la chambre principale (27),
où le dispositif d'aspiration (10) comprend en outre un élément de confinement (40) applicable à au moins un outil d'une unité auxiliaire (70), où ledit élément de confinement (40) comprend :
- un élément annulaire plat (41) monté substantiellement à proximité de l'extrémité (111) de la zone de tête (110) de l'électrobroche (100) ou aligné sur celle-ci, de manière à obstruer le passage annulaire (28) entre celle-ci et le bord périphérique (25) de la hotte ; et
- au moins un carter (50) qui entoure au moins en partie ledit outil de l'unité auxiliaire (70), formant au moins une chambre secondaire (52) ;
où ladite chambre secondaire (52) communique avec une ouverture (43) formée dans l'élément annulaire (41) qui, dans l'état de fonctionnement susmentionné, débouche dans la chambre principale (27) de manière à mettre ladite chambre secondaire (52) en communication avec le moyen d'aspiration.

2. Tête d'usinage (1) selon la revendication 1, dans laquelle ladite hotte (20) comprend une première partie mobile (21), montée de manière coulissante sur le corps de l'électrobroche au niveau de la zone de tête (110), et une seconde partie mobile (22), montée de manière coulissante par rapport à ladite première partie (21), ladite ouverture (26) étant formée à l'extrémité (23) de ladite seconde partie (22).

3. Tête d'usinage (1) selon la revendication 2, où la première portion (21) de la hotte a un développement tubulaire et présente une section de forme substantiellement identique à celle de la zone de tête (110) de l'électrobroche (100) et où la deuxième portion (22) comprend un premier tronçon annulaire (22a) s'étendant radialement à partir de la première portion (21) et un deuxième tronçon tubulaire (22b).

4. Tête d'usinage (1) selon l'une des revendications précédentes, dans laquelle une ouverture (35) est formée dans la deuxième partie (22) qui débouche dans un conduit (29) en communication avec le moyen d'aspiration.

5. Tête d'usinage (1) selon l'une des revendications précédentes, dans laquelle ledit bord périphérique (25) présente un diamètre inférieur à celui de la hotte (20) et est formé sur une face d'extrémité (23) de ladite hotte.

6. Tête d'usinage (1) selon la revendication 5, dans laquelle des encoches tangentielles (32) sont formées sur ladite face d'extrémité (23) qui créent un flux tourbillonnant dans la chambre principale (27).

7. Tête d'usinage (1) selon l'une des revendications précédentes, dans laquelle ledit élément de confinement (40) est applicable de manière amovible à l'unité auxiliaire (70) lorsqu'elle est connectée à l'électrobroche (100).
